# EUROPEAN PATENT APPLICATION

(11) **EP 4 674 673 A1**
(43) Date of publication of application: **07.01.2026**
(21) Application number: 25180786.3
(22) Date of filing: 04.06.2025
(51) Int. Cl.: B60L 53/14, B60L 53/66

(54) **WAKE-UP CIRCUIT OF ELECTRIC VEHICLE CHARGER AND METHOD FOR OPERATING THE SAME**

(30) Priority: 03.07.2024 US 202463667275 P; 06.02.2025 CN 202510133630
(71) Applicant: DELTA ELECTRONICS, INC., Taoyuan City 320023 (TW)
(72) Inventor: HO, Ming-Chang, 320023 Taoyuan City (TW); HSU, Jui-Yuan, 320023 Taoyuan City (TW)
(74) Representative: 2K Patentanwälte Blasberg Kewitz & Reichel

(57) **Abstract**

A wake-up circuit (5) for an electric vehicle charger (100) which includes a power path (1) coupled to a power device (300) and an electric vehicle, an auxiliary power circuit (3) coupled to the power path (1), and a system controller (4). The wake-up circuit (5) includes a switch (52), a controller (4A) and a connection end (56), and the switch (52) is used to receive a trigger (Tg). When the electric vehicle charger (100) is in a power outage state, the controller (4A) is enabled according to an energy storage voltage (Vb) provided by an energy storage device (400) coupled to the connection end (56). When the controller (4A) is in the power outage state, the controller (4A) notifies the electric vehicle to be set to a feed mode according to the trigger (Tg), so that the electric vehicle provides a vehicle power (Pv) to the power path (1), and the auxiliary power circuit (3) provides a first DC voltage (Vdc1) to supply power to the system controller (4) according to the vehicle power (Pv).

## Description

### BACKGROUND

### Technical Field

The present disclosure relates to a wake-up circuit and a method for operating the same, and more particularly to the wake-up circuit for an electric vehicle charger and the method for operating the same.

### Description of Related Art

The statements in this section merely provide background information related to the present disclosure and do not necessarily constitute prior art.

Currently, as electric vehicles emphasize energy conservation and carbon reduction, they are gradually being transitioned from fuel-driven to electricity-driven. In particular, a power source of an electric vehicle (commonly referred to as an electric car) is a battery, which requires charging for the battery to maintain the endurance of the electric vehicle. On the other hand, since a battery in an electric vehicle may be used to store power, when the battery power of the battery is sufficient, the battery power may also be used to feed back to an electric vehicle charger, so as to supply power to a power device coupled to the electric vehicle charger (for example but not limited to, a power grid or an emergency power socket, etc.). However, in conventional electric vehicle chargers, when the battery power of the electric vehicle is used to supply power to the power device, the power device is considered as a load and is generally unable to supply power to the electric vehicle charger. Therefore, a system controller inside the electric vehicle charger lacks the power source and fails to be successfully enabled, so as to cause the electric vehicle charger to be unable to set a charging and discharging mode by a handshake communication with the electric vehicle. Therefore, this situation leads to operational inconvenience and difficulty in setting the operation mode.

Therefore, how to design a wake-up circuit for an electric vehicle charger and a method for operating the same to resolve that the issue where the system controller inside the electric vehicle charger fails to be successfully enabled when the electric vehicle needs to feed power back to the electric vehicle charger has become a critical topic in this field.

### SUMMARY

In order to solve the problems above, the present disclosure provides a wake-up circuit for an electric vehicle charger, and the electric vehicle charger includes a power path for coupling a power device and an electric vehicle, and an auxiliary power circuit for coupling the power path. When the power device fails to provide a device power to the power path, the power path is disconnected, and the auxiliary power circuit fails to provide a first DC voltage to supply power to a system controller according to the device power, causing the system controller to enter a power outage state. The wake-up circuit includes a switch, a controller and a connection end, and the switch is configured to receive a trigger. The controller is coupled to the electric vehicle and the switch, and the connection end is coupled to the controller. The connection end is configured to be coupled to an energy storage device, so that when the electric vehicle charger is in the power outage state, the controller is enabled according to an energy storage voltage provided by the energy storage device. wherein the controller is configured to notify the electric vehicle to be set to a feed mode according to the trigger when the controller is in the power outage state, so that the electric vehicle is configured to provide a vehicle power to the power path, and the auxiliary power circuit is configured to provide the first DC voltage to supply power to the system controller according to the vehicle power.

In order to solve the problems above, the present disclosure provides an operating method for an electric vehicle charger, and the electric vehicle charger is configured to be coupled to a power device and an electric vehicle by a power path. The operating method includes steps of: (a) disconnecting the power path when the power device fails to provide a device power to the power path, and causing an auxiliary power circuit of the electric vehicle charger to be unable to provide a first DC voltage to supply power to a system controller of the electric vehicle charger according to the device power, thereby disabling the system controller and entering a power outage state. (b) detecting whether a trigger is received according to an energy storage voltage in the power outage state. (c) notifying the electric vehicle to be set to a feed mode according to the trigger when the trigger is received. (d) causing the electric vehicle to provide a vehicle power to the power path in the feed mode. (e) causing the auxiliary power circuit to provide the first DC voltage to supply power to the system controller according to the vehicle power, so that the system controller is enabled. (f) performing a handshake communication between the system controller and the electric vehicle when the system controller is enabled, and connecting the power path when the handshake communication is completed, thereby feeding the vehicle power to the power device.

The main purpose and effect of the present disclosure is that after the electric vehicle charger is connected to the electric vehicle, it provides a specific signal to notify the electric vehicle by a trigger provided by a user, so that the electric vehicle provides the vehicle power to wake-up the system controller inside the electric vehicle charger. Therefore, the electric vehicle charger of the present disclosure may be started properly in the power outage state, and no need for an external power supply to keep the electric vehicle charger in a continuously operating state.

It is to be understood that both the foregoing general description and the following detailed description are exemplary, and are intended to provide further explanation of the present disclosure as claimed. Other advantages and features of the present disclosure will be apparent from the following description, drawings, and claims.

### BRIEF DESCRIPTION OF DRAWINGS

The present disclosure can be more fully understood by reading the following detailed description of the embodiment, with reference made to the accompanying drawing as follows:
FIG. 1 is a circuit block diagram of an electric vehicle charger according to the present disclosure.
FIG. 2 is a circuit block diagram of a first embodiment of a wake-up circuit according to the present disclosure.
FIG. 3A is a first operation flowchart of the first embodiment of the electric vehicle charger according to the present disclosure.
FIG. 3B is a second operation flowchart of the first embodiment of the electric vehicle charger according to the present disclosure.
FIG. 4 is a circuit block diagram of a second embodiment of the wake-up circuit according to the present disclosure.
FIG. 5A is a first operation flowchart of the second embodiment of the electric vehicle charger according to the present disclosure.
FIG. 5B is a second operation flowchart of the second embodiment of the electric vehicle charger according to the present disclosure.
FIG. 6 is a circuit block diagram of a third embodiment of the wake-up circuit according to the present disclosure.
FIG. 7A is a first operation flowchart of the third embodiment of the electric vehicle charger according to the present disclosure.
FIG. 7B is a second operation flowchart of the third embodiment of the electric vehicle charger according to the present disclosure.
FIG. 8 is a circuit block diagram of a fourth embodiment of the wake-up circuit according to the present disclosure.
FIG. 9A is a first operation flowchart of the fourth embodiment of the electric vehicle charger according to the present disclosure.
FIG. 9B is a second operation flowchart of the fourth embodiment of the electric vehicle charger according to the present disclosure.
FIG. 10 is a circuit block diagram of a fifth embodiment of the wake-up circuit according to the present disclosure.
FIG. 11A is a first operation flowchart of the fifth embodiment of the electric vehicle charger according to the present disclosure.
FIG. 11B is a second operation flowchart of the fifth embodiment of the electric vehicle charger according to the present disclosure.
FIG. 12 is a circuit block diagram of a sixth embodiment of the wake-up circuit according to the present disclosure.
FIG. 13A is a first operation flowchart of the sixth embodiment of the electric vehicle charger according to the present disclosure.
FIG. 13B is a second operation flowchart of the sixth embodiment of the electric vehicle charger according to the present disclosure.

### DETAILED DESCRIPTION

Reference will now be made to the drawing figures to describe the present disclosure in detail. It will be understood that the drawing figures and exemplified embodiments of present disclosure are not limited to the details thereof.

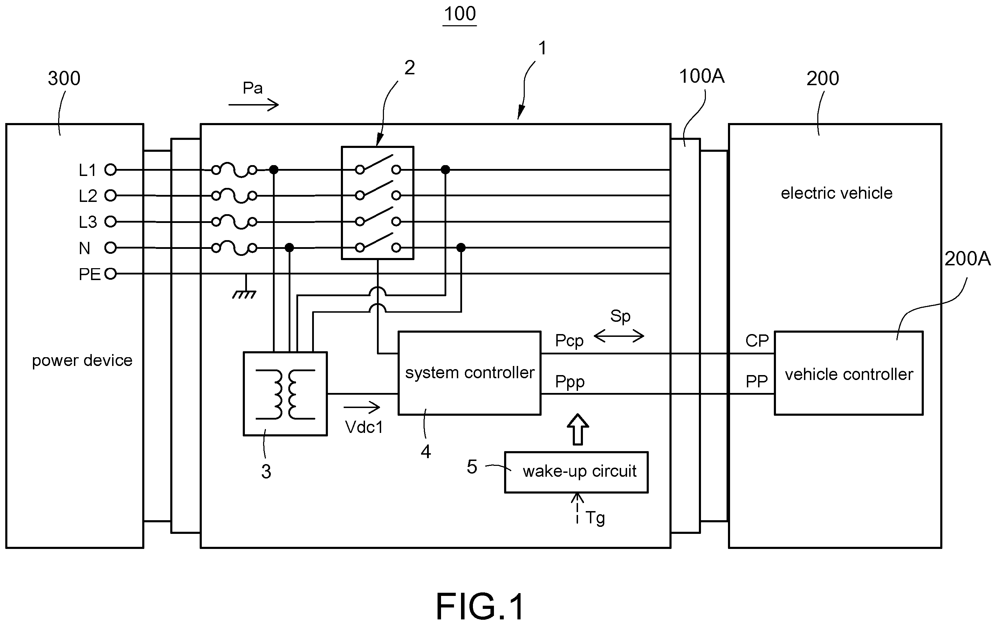

Please refer to FIG. 1, which shows a circuit block diagram of an electric vehicle charger according to the present disclosure. In FIG. 1, the electric vehicle charger 100 includes a power path 1, a main switch 2, an auxiliary power circuit 3, a system controller 4, and a wake-up circuit 5. One end of the power path 1 is coupled to the electric vehicle 200, and the other end of the power path 1 is coupled to the power device 300. In particular, the power device 300 may be a power supply device such as a power grid or an electric vehicle charging station, depending on the type of electric vehicle charger 100 and is not limited thereto. The main switch 2 is connected in series with the power path 1, and the system controller 4 is used to control the main switch 2 to turn on/off to connect or disconnect the power path 1. The auxiliary power circuit 3 is coupled to the power path 1 to convert a power on the power path 1 to supply power to the system controller 4. Specifically, the auxiliary power circuit 3 is coupled between the main switch 2 and the power device 300, and between the main switch 2 and the electric vehicle 200. Furthermore, when either the power device 300 or the electric vehicle 200 supplies power, the auxiliary power circuit 3 may perform power conversion to supply power to the system controller 4.

On the other hand, the system controller 4 includes a control pilot pin Pcp and a proximity pilot pin Ppp, and the control pilot pin Pcp and a proximity pilot pin Ppp are plugged into the electric vehicle 200 by a connection port 100A such as a charging gun and are respectively coupled to the corresponding ends of the vehicle controller 200A inside the electric vehicle 200. That is, the control pilot pin Pcp is coupled to the control pilot end CP of the vehicle controller 200A, and the proximity pilot pin Ppp is coupled to the proximity pilot end PP of the vehicle controller 200A. In particular, since the two are connected, for simplicity, only one end (or terminal) is recorded below. For example, if a component is described as being coupled to the proximity pilot end PP, although it is not described that the component is coupled to the proximity pilot pin Ppp, since the two are connected, the meaning it represents also includes that the component is coupled to the proximity pilot pin Ppp, and so on, and is not repeated description thereto.

Furthermore, the proximity pilot pin Ppp mainly determines whether the connection port 100A is correctly plugged into the electric vehicle 200 by the impedance/voltage along the path when the connection port 100A is plugged into the electric vehicle 200. Furthermore, the system controller 4 may also determine how much current (i.e., the upper limit of the charging and discharging current) may transmit on the power path by the impedance/voltage along the path. The control pilot pin Pcp mainly performs handshake communication with the electric vehicle 200 by transmitting a pulse signal Sp after the system controller 4 is enabled (i.e., to transmit the pulse signal Sp to each other), so as to obtain parameters such as the charging/discharging state and the charging/discharging current of the electric vehicle 200.

When the power device 300 is in a power energized, and the electric vehicle charger 100 is not yet coupled to the electric vehicle 200, the auxiliary power circuit 3 may continuously convert a device power Pa provided by the power device 300 to a first DC voltage Vdc1, and provide the first DC voltage Vdc1 to supply power to the system controller 4. Therefore, the system controller 4 is usually already enabled and enters an operating state, and the operating state may generally be preset to the charging mode. Therefore, when the electric vehicle 200 is connected to the electric vehicle charger 100, the system controller 4 may determine whether the connection port 100A is correctly plugged into the electric vehicle 200 by the proximity pilot pin Ppp, and obtain parameters such as the charging/discharging state and the charging/discharging current of the electric vehicle 200 by the handshake communication with the electric vehicle 200 by the control pilot pin Pcp. Furthermore, when the handshake communication is completed, the system controller 4 turns on the main switch 2 to transmit the device power Pa provided by the power device 300 to the electric vehicle 200 to charge the electric vehicle 200.

On the contrary, when the power device 300 experiences a power outage, the auxiliary power circuit 3 lacks a power source and therefore is unable to provide the first DC voltage Vdc1 to supply power to the system controller 4. Therefore, the system controller 4 is disabled and enters a power outage state. That is, in conventional electric vehicle chargers, when the system controller 4 is in the power outage, the entire electric vehicle charger 100 fails to operate, so that even if the electric vehicle 200 is plugged into the connection port 100A, the electric vehicle charger 100 fails to generate any response to the plugging of the electric vehicle 200. In contrast, the electric vehicle charger 100 of the present disclosure may be enabled by the operation of the wake-up circuit 5 in the power outage state and the electric vehicle 200 is plugged into the connection port 100A, and then the electric vehicle charger 100 may attempt to communicate with the electric vehicle 200 to adjust to a feed mode, so that the electric vehicle 200 may feed power to the power device 300. Specifically, the wake-up circuit 5 receives the trigger Tg and adjusts the voltage, signal and other parameters on the proximity pilot pin Ppp or the control pilot pin Pcp according to the trigger Tg, so that when the electric vehicle charger 100 is in the power outage state, it is enabled with the assistance of the electric vehicle 200, so that the system controller 4 may attempt to communicate with the electric vehicle 200.

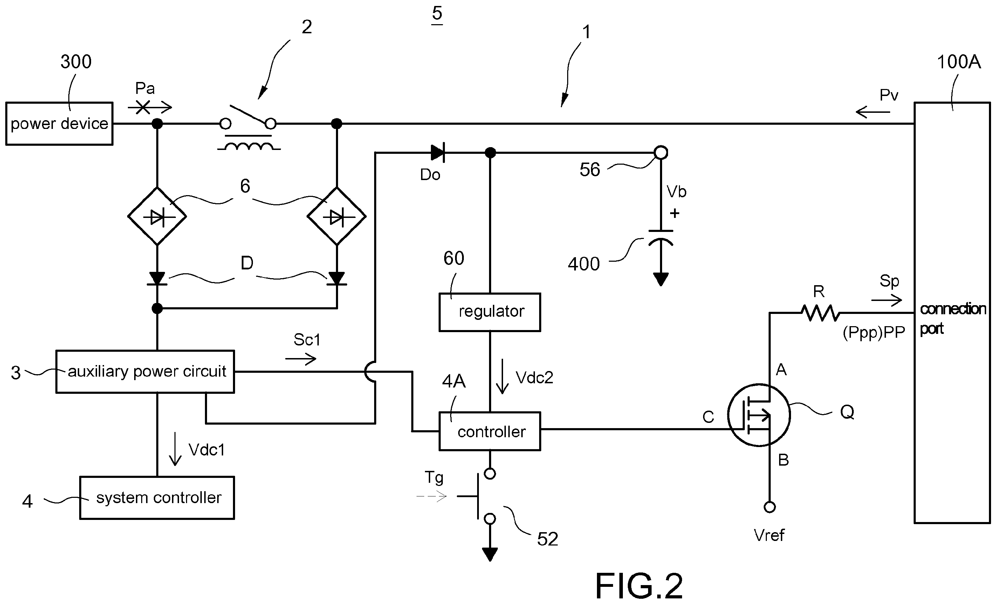

Please refer to FIG. 2, which shows a circuit block diagram of a first embodiment of a wake-up circuit according to the present disclosure, and also refer to FIG. 1. The electric vehicle charger 100 of FIG. 2 mainly shows the detailed structures of the electric vehicle charger 100 and the wake-up circuit 5 under the circuit architecture of FIG. 1. Specifically, the electric vehicle charger 100 may further include two sets of bridge rectifier circuits 6 and two sets of diodes D. The bridge rectifier circuits 6 are respectively coupled to both ends of the main switch 2, and the diodes D are respectively coupled between the bridge rectifier circuits 6 and the auxiliary power circuit 3. The auxiliary power circuit 3 may be, for example but not limited to, a flyback conversion circuit, but is not limited thereto. Any power conversion circuit capable of converting power to DC voltage should be included in the scope of this embodiment. The bridge rectifier circuits 6 may rectify AC power on the power path 1, and if the power path 1 carries DC power, the bridge rectifier circuits 6 may be omitted.

The diodes D may be ORing diodes, which may provide a better protection function for the electric vehicle charger 100. Furthermore, the ORing diodes are mainly used to isolate both sides of the main switch 2. Specifically, in order to comply with electrical safety tests such as the high-potential test (Hi-pot test), both sides of the main switch 2 and the power path 1 to the auxiliary power circuit 3 are usually required to withstand voltages above 1000V. However, relying solely on the bridge rectifier circuits 6 might not be able to withstand such a high voltage, forcing the use of high-specification bridge rectifier circuits, which increases the circuit cost. Moreover, if an active switching element (such as but not limited to a relay) is used, it must be additionally powered for control. However, when the power device 300 is in the power outage, it becomes difficult to generate additional power to drive the relay to turn on. Therefore, using the ORing diodes to increase the withstand voltage is a better solution, as it enhances the withstand voltage to make it meet safety standards, and requires no additional power for operating. However, if the electric vehicle charger 100 does not consider the safety standards, the diodes D may not be additionally configured.

The wake-up circuit 5 is coupled between the proximity pilot end PP and the auxiliary power circuit 3 of the electric vehicle 200 and the wake-up circuit 5 includes a switch 52, a controller 4A, and a connection end 56. The switch 52 is used to receive the trigger Tg provided by the user to connect two ends of contacts of the switch 52 (i.e., turn on), and the switch 52 may be a switch element such as a push switch or a touch switch that is turned on according to the trigger Tg. In the present disclosure, the switch 52 is illustratively exemplified as a pushbutton switch. The controller 4A is coupled to the switch 52 and may be used to couple to the electric vehicle 200 by the connection port 100A. In particular, the controller 4A may be couple to the electric vehicle 200 by coupling the proximity pilot pin Ppp or the control pilot pin Pcp, other implementations will be further described later and is not repeated description thereto. In addition, the controller 4A may be a device independent of the system controller 4 (for example but not limited to, a microcontroller, a digital signal processor, a field-programmable gate array, which have signal processing functions), but it may also be the system controller 4. The operation methods of the two are slightly different, and this embodiment is described as if the controller 4A may be the device independent of the system controller 4, and other implementations will be further described later.

The connection end 56 is coupled to the controller 4A and is used for coupling to the energy storage device 400, which provides an energy storage voltage Vb. Therefore, in the power outage state, the controller 4A may be enabled according to the energy storage voltage Vb provided by the energy storage device 400. Furthermore, when the controller 4A is enabled, it may detect whether the user presses the switch 52 to generate the trigger Tg, and notify the electric vehicle 200 to set the feed mode according to the trigger Tg. In particular, the controller 4A may have a variety of detection methods, such as directly detecting the signal generated by the user presses the switch 52. As shown in FIG. 2, when the switch 52 is pressed, the controller 4A detects the change in potential and determines that the switch 52 is pressed. The above detection methods are only illustratively examples, and there are various other detection methods, which will not be described one by one.

On the other hand, in one embodiment, the energy storage device 400 may be an external battery, and the external battery may be, for example but not limited to, a supercapacitor, a carbon-zinc battery, rechargeable battery, or other easily available batteries. Since it is difficult to obtain additional power in a remote area far from a city, if the electric vehicle 200 does not have a function of automatically setting itself to the feed mode (temporarily), the controller 4A of the electric vehicle charger 100 still fails to be successfully enabled, causing inconvenience in use. Therefore, the wake-up circuit 5 of FIG. 2 may utilize the connection end 56 to couple to the external battery to receive the energy storage voltage Vb, and enable the controller 4A, so as to avoid the above situation. Furthermore, when the electric vehicle charger 100 is fixed device that is not easy to move, the operator may also use a simple battery replacement method to make the electric vehicle charger 100 equipped with a power outage wake-up function.

As everyone knows, the energy storage voltage Vb changes according to the energy level of the energy storage device 400. Therefore, in order to prevent the energy storage voltage Vb of the energy storage device 400 from being insufficient to enable the controller 4A when the energy storage device 400 is at low energy level, the wake-up circuit 5 may selectively include a regulator 60. The regulator 60 is coupled between the connection end 56 and the controller 4A and converts the energy storage voltage Vb to a second DC voltage Vdc2. In this way, the second DC voltage Vdc2 with a fixed voltage level may be provided to the controller 4A to stably supply power to the controller 4A, so as to avoid the voltage level of the energy storage voltage Vb from being too low to enable the controller 4A. However, if the voltage level of the energy storage voltage Vb is not considered to be too low, the regulator 60 may be omitted. In this embodiment, the regulator 60 may preferably be a power conversion device with low power consumption, low cost such as a linear regulator (LDO), but it may also be a device having a power conversion function controlled by a controller such as, but not limited to, a DC converter (applicable embodiments will be described later).

In addition, when the energy storage device 400 is a supercapacitor or rechargeable battery, the auxiliary power circuit 3 may be coupled to the connection end 56. Furthermore, when the auxiliary power circuit 3 provides the first DC voltage Vdc1, the first DC voltage Vdc1 provided by the auxiliary power circuit 3 may charge the energy storage device 400. In this way, the use time of the energy storage device 400 may be extended, so that the electric vehicle charger 100 may replace the energy storage device 400 less frequently. On the other hand, in order to prevent the energy storage voltage Vb from flowing back to the auxiliary power circuit 3, the wake-up circuit 5 may also include a unidirectional conduction element Do. The unidirectional conduction element Do is coupled to the path from the auxiliary power circuit 3 to the connection end 56, and the direction of the unidirectional conduction element Do from the auxiliary power circuit 3 to the connection end 56 is forward biased (referring to the direction of current flow). In particular, the unidirectional conduction element Do may be, for example but not limited to, a semiconductor element such as a diode or a thyristor.

When the device power Pa invalid due to power outage, failure and other reasons of the power device 300, or the user wants to use the vehicle power Pv as a power source (for example but not limited to, when electricity prices are high, the electricity stored in electric vehicle 200 may be used first), and the electric vehicle charger 100 is not yet coupled to the electric vehicle 200, there will be no power on the power path 1 from the power device 300 to the main switch 2 due to the device power Pa invalidated. Regardless of the reason, the auxiliary power circuit 3 is unable to obtain compliant device power Pa by the power path 1 between the power device 300 and the main switch 2. Therefore, the auxiliary power circuit 3 fails to provide the first DC voltage Vdc1 according to the device power Pa, and provides the first DC voltage Vdc1 to supply power to the system controller 4. Therefore, the system controller 4 is forced to shut down (disable) and enter the power outage state, causing the entire electric vehicle charger 100 to stop operating.

In the embodiment of FIG. 2, the controller 4A couples the proximity pilot pin Ppp to the proximity pilot end PP of the electric vehicle 200. In the power outage state, when the electric vehicle 200 is coupled to the connection port 100A of the electric vehicle charger 100, the electric vehicle charger 100 fails to be enabled due to the power outage, so that the electric vehicle charger 100 fails to generate any response to the plugging of the electric vehicle 200. Furthermore, since the electric vehicle 200 is coupled to the electric vehicle charger 100 and the user has not yet pressed the switch 52, the trigger Tg is not generated, so the controller 4A fails to adjust the impedance of the proximity pilot end PP so that the impedance of the proximity pilot end PP is maintained for a first impedance in a normal charging mode, and the electric vehicle 200 has not yet been changed to the feed mode and fails to provide the vehicle power Pv to the power path 1.

In general, when the proximity pilot pin Ppp of the system controller 4 is usually coupled to the proximity pilot end PP of the electric vehicle 200, a specific current is output from the proximity pilot end PP. The specific current flows through the predetermined impedance (such as but not limited to resistance) on this path to generate a voltage, and the proximity pilot pin Ppp of the system controller 4 or the proximity pilot end PP of the electric vehicle 200 may determine what the impedance is by detecting the voltage. In order to avoid the following description of this feature being too long-winded, only the impedance change is briefly described below without elaborating on the principle of the impedance change.

Then, when the user presses switch 52, a trigger Tg is generated due to the pressing of switch 52, and controller 4A adjusts the impedance of the proximity pilot end PP from the first impedance to a second impedance according to the trigger Tg. Therefore, the electric vehicle 200 may detect that the impedance from the proximity pilot end PP to the proximity pilot pin Ppp has changed. In this way, the electric vehicle 200 may be informed that the operating mode needs to be set to the feed mode. In particular, the controller 4A has a variety of means for adjusting the impedance of the proximity pilot end PP. For example, but not limited to, the impedance of the proximity pilot end PP is adjusted by turning the transistor Q on or off, as shown in FIG. 2.

Specifically, the transistor Q includes a first end A, a second end B, and a control end C, and the transistor Q is not limited to a particular type. Any semiconductor element that that may be used for turn on/off (for example, but not limited to a BJT, FET, or other semiconductor element), it should be included in the scope of this embodiment. In one embodiment, the transistor Q may be a PNP transistor, for example, but is not limited thereto and may be adaptively substituted according to the operating logic of the present disclosure. The first end A of the transistor Q is coupled to the proximity pilot end PP (the proximity pilot pin Ppp), the second end B of transistor Q is coupled to the reference potential Vref, and the control end C of the transistor Q is coupled to the controller 4A. Since it is not easy to obtain additional power when the electric vehicle charger 100 is in the power outage state, it is a better implementation that the reference potential Vref is a ground potential, but is not limited thereto, and it is possible to use, for example, but not limited to, a supercapacitor to provide a potential that is not zero.

When the user presses the switch 52 to trigger Tg, the controller 4A turns on the transistor Q according to the trigger Tg to couple the proximity pilot end PP to the reference potential Vref. Therefore, the voltage on this path is changed according to the connection of the proximity pilot end PP to the reference potential Vref, and the impedance of this path is also changed accordingly to inform the electric vehicle 200 to set the operation mode to the feed mode, so that the electric vehicle 200 may know that the impedance has been changed by detecting the change of the voltage and set the operation mode to the feed mode accordingly. On the contrary, when the user does not press the switch 52 without generating a trigger Tg, the controller 4A turns off the transistor Q so that the impedance of the proximity pilot end PP is maintained at the original impedance (for example, but not limited to, the first impedance, or any other impedance in the operation mode).

On the other hand, the wake-up circuit 5 selectively includes a resistor R. The resistor R is connected in series in the path from the proximity pilot end PP to the reference potential Vref, and the resistor R may be used to limit the current in the path from the proximity pilot end PP to the reference potential Vref in addition to changing the impedance of the proximity pilot end PP when the transistor Q is turned on, so as to prevent the electronic elements (i.e. the transistor Q) in the path from being damaged by excessive current in the path. Therefore, in the situation with resistor R, the electric vehicle 200 may make the resistor R be incorporated to the path connecting the proximity pilot end PP to the reference potential Vref according to the user pressing the switch 52, so that the impedance of the proximity pilot end PP is changed from the first impedance to the second impedance according to the influence of the resistor R. In this way, the electric vehicle 200 may be set to feed mode and supply the vehicle power Pv to the power path 1 (at this time, the system controller 4 has not yet controlled the main switch 2 to turn on).

In the feed mode, the auxiliary power circuit 3 may supply the system controller 4 with the first DC voltage Vdc1 according to the vehicle power Pv. Taking the structure in FIG. 2 as an example, the vehicle power Pv may be rectified to DC power by the bridge rectifier circuit 6 and supplied to the auxiliary power circuit 3, so that the auxiliary power circuit 3 converts the DC power to the first DC voltage Vdc1 and supplies power to the system controller 4 accordingly. When the system controller 4 is enabled by the power supply, the system controller 4 and the electric vehicle 200 perform handshake communication with each other by the control pilot pin Pcp to obtain parameters such as the charging and discharging status and charging and discharging current of the electric vehicle 200. Furthermore, after the system controller 4 has completed handshake communication with the electric vehicle 200, the system controller 4 turns on the main switch 2 to transmit the vehicle power Pv provided by the electric vehicle 200 to the power device 300 and feed power to the power device 300.

In particular, the electric vehicle 200 may optionally set this state of the feed mode to a temporary feed mode (i.e., the feed mode that has not completed handshake communication is set to temporary feed mode, which may be referred to as temporary mode), and when the electric vehicle 200 completes handshake communication with the system controller 4 in the temporary mode, the electric vehicle 200 may maintain the operating mode in the feed mode (which is steady-state feed mode and may be referred to as steady-state mode), and turn on the main switch 2 to feed the vehicle power Pv to the power device 300. In particular, temporary mode and steady-state mode will be described in further detail below, and is not repeated description thereto.

On the other hand, in order to prevent the user from mistakenly triggering switch 52 and causing the electric vehicle charger 100 to be malfunctioned and performed erroneous operation. Therefore, the electric vehicle charger 100 of the present disclosure is further configured with a foolproof mechanism to prevent the above situation from occurring. Specifically, the controller 4A may determine that the trigger Tg is a valid trigger according to the trigger Tg being maintained for a first predetermined time, and adjust the voltage, signal and other parameters accordingly, so that the electric vehicle 200 may be set to the feed mode according to the parameter changes on the proximity pilot pin Ppp or the control pilot pin Pcp. In this way, the risk of the electric vehicle charger 100 malfunctioning due to the user mistakenly triggering switch 52 may be avoided. Furthermore, in the circuit structure of FIG. 2, the controller 4A may determine that the trigger Tg is the valid trigger according to the trigger Tg being maintained for the first predetermined time, and turn on the transistor Q according to the valid trigger, so that the electric vehicle 200 may detect that the impedance of the proximity pilot end PP is changed and determine that the operating mode needs to be set to the feed mode.

On the other hand, the controller 4A may provide another foolproof mechanism according to the first DC voltage Vdc1. Specifically, when the auxiliary power circuit 3 may provide the first DC voltage Vdc1, the auxiliary power circuit 3 also provides the first control signal Sc1. Furthermore, when the trigger Tg is detected by the controller 4A, the controller 4A also detects whether the first control signal Sc1 is received. In particular, when the auxiliary power circuit 3 may provide the first DC voltage Vdc1, it means that the system controller 4 is still enabled and not in the power outage state. Therefore, when the controller 4A determines that both exist during the same period, the controller 4A determines that the trigger Tg is an invalid trigger to disable the switch 52, so that the controller 4A fails to change any of the current operations according to the trigger Tg (i.e., it maintains the current operation).

That is to say, taking FIG. 2 as an example, the controller 4A fails to change the current state of the transistor Q, so as to prevent the electric vehicle charger 100 from repeatedly entering the power outage state due to the repeated pressing of the switch 52 by the user. In particular, the first control signal Sc1 may be the first DC voltage Vdc1 (for example, but not limited to 12V), and the first DC voltage Vdc1 is generally used to supply power to the system controller 4, but is not limited thereto. That is, the first control signal Sc1 may also be any specific voltage corresponding to the first DC voltage Vdc1 (for example, but not limited to, it may be a voltage of any node that is controlled by an internal controller of the auxiliary power circuit 3).

In addition, the electric vehicle charger 100 may be provided with an additional foolproof mechanism by the control pilot pin Pcp. Specifically, since the system controller 4 may receive or send the pulse signal Sp by the control pilot pin Pcp for handshake communication, it means that the system controller 4 is still in operation and may dominate the operation of the electric vehicle charger 100. Therefore, when the system controller 4 or the electric vehicle 200 detects that the system controller 4 may receive or send the pulse signal Sp by the control pilot pin Pcp to perform handshake communication with each other (for example, but not limited to, the controller 4A is coupled to the control pilot pin Pcp and is obtained by detecting the response thereof by transmitting a test signal), even if the impedance of the proximity pilot pin PP of the electric vehicle 200 is changed to the second impedance (equivalent to the impedance of the proximity pilot pin Ppp, since the proximity pilot pin PP and the proximity pilot pin Ppp are generally of the same impedance due to coupling together), the electric vehicle 200 (or the system controller 4) ignores that the impedance is changed to the second impedance (i.e., it is not set to the feed mode according to the impedance being changed to the second impedance). Therefore, even if the user presses the switch 52, the electric vehicle 200 fails to change the operating mode that as currently executed accordingly (the operating mode that as currently performed is generally preset to be the charging mode in which the electric vehicle 200 receives power). In addition, the electric vehicle charger 100 may be provided with an additional foolproof mechanism that detects the pulse signal Sp. For example, but not limited to, when the controller 4A obtains that the system controller 4 may be perform handshake communication with the electric vehicle 200 by the pulse signal Sp by detecting the control pilot pin Pcp, the controller 4A turns off the transistor Q, and therefore is unable to adjust the impedance of the proximity pilot end PP to a second impedance (since the system controller 4 may be normally operating at this time, the impedance may not be the first impedance), and the electric vehicle 200 is not set to the feed mode accordingly.

On the other hand, with reference to FIG. 2, the controller 4A is generally in a standby or sleeping state with continuous supply power from the energy storage device 400, and the electric vehicle charger 100 is controlled by outputting a corresponding signal according to the controller 4A when the trigger Tg is received. However, in order to further save the power consumption of the energy storage device 400, and cooperate with the operation of the foolproof mechanism, the controller 4A may be disable in the power outage state, and the electric vehicle charger 100 may be enabled by the switch 52 coupled to a ground end to provide a complete power supply loop for the controller 4A. Specifically, one end of the switch 52 is coupled to the controller 4A, and the other end of the switch 52 may be coupled to the ground end. When the user presses the switch 52, a ground pin (not shown in the FIG.) of the controller 4A may be coupled to the ground end, so that the connection end 56, the controller 4A, and the switch 52 to the ground end form the complete power supply loop, so as to enable the controller 4A. Therefore, the controller 4A is enabled only when the user presses the switch 52 to provide the power outage wake-up function. Therefore, the controller 4A is enabled only when the user presses the switch 52 to provide the power failure wake-up function, and is disabled at the other times without consuming power. In this way, the usage time of the energy storage device 400 may be significantly extended. On the other hand, when the controller 4A has this foolproof mechanism, it is generally necessary to enable the controller 4A before the system controller 4 is enabled, so that the switch 52 needs to be continuously pressed for a short period of time, which is suitable for the foolproof mechanism that prevents the user from mistakenly triggering the switch 52, but is not limited thereto. In one embodiment, the above features of the above electric vehicle charger 100 may be selected for application alone or in combination with each other, and will not be described one by one.

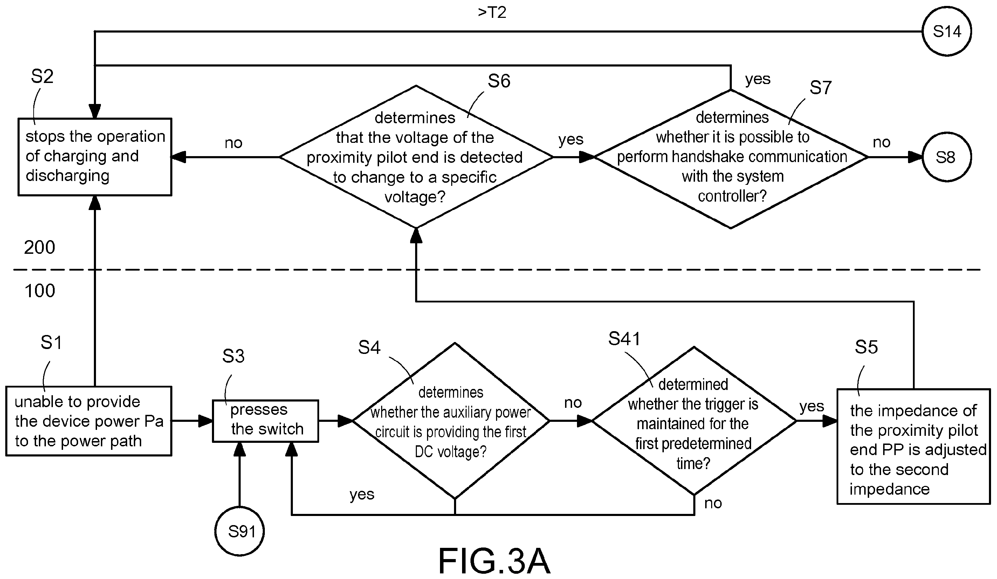

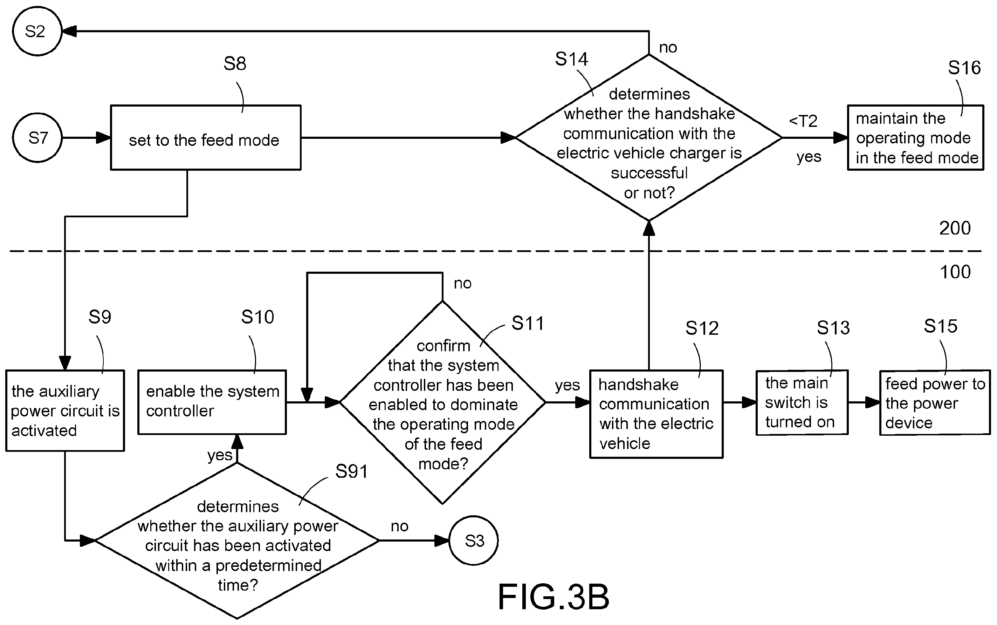

Please refer to FIG. 3A which shows a first operation flowchart of the first embodiment of the electric vehicle charger according to the present disclosure, FIG. 3B which shows a second operation flowchart of the first embodiment of the electric vehicle charger according to the present disclosure, and also refer to FIGs. 1-2. Wherein the flow of FIG. 3B is mainly a continuation of the flow of FIG. 3A. In FIG. 3A, the operation flow is divided to the operation flow at the electric vehicle charger 100 and the operation flow at the electric vehicle 200, and the two are complementary to each other. In particular, this operation flow is only a better implementation of the various operation flows, but is not limited thereto. In FIG. 3A, when the power device 300 is unable to provide the device power Pa to the power path 1 (step S1), the electric vehicle 200 stops the operation of charging and discharging (step S2). Furthermore, after step S1, when the user presses the switch 52 (step S3), the wake-up circuit 5 determines whether the auxiliary power circuit 3 is providing the first DC voltage Vdc1 (for example, but not limited to, 12V, step S4). When the determination is yes, it returns to step S3 to not change any current operation according to the trigger Tg. On the contrary, when the determination is no, it is determined whether the trigger is maintained for the first predetermined time (step S41) for the protection of the foolproof mechanism. When the determination is no, return to step S3. On the contrary, the impedance of the proximity pilot end PP is adjusted to the second impedance (step S5).

At step S5, the electric vehicle 200 determines that the voltage of the proximity pilot end PP is detected to change to a specific voltage (step S6). When the voltage of the proximity pilot end PP changes to the specific voltage, it means that the impedance of the proximity pilot end PP changes to the second impedance. Then, the electric vehicle 200 determines whether it is possible to perform handshake communication with the system controller 4 (step S7). In particular, step S7 also serves as the protection of the foolproof mechanism. Therefore, if the determination result is yes, it means that when the two may communicate with each other and the system controller 4 is still in operation and may dominate the operation of the electric vehicle charger 100. Therefore, step S2 is returned to wait for the indication of the system controller 4. On the contrary, if the determination is no, it means that the system controller 4 is unable to operate and is in the power outage state. Therefore, the electric vehicle 200 is set to the feed mode (step S8) to provide the vehicle power Pv to the power path 1.

In particular, step S7 may also be detected and controlled by the controller 4A. Furthermore, the feed mode of step S8 is only a temporary mode, mainly to enable the system controller 4 so that the electric vehicle charger 100 may perform active charging and discharging operations. Therefore, the electric vehicle 200 may preset the discharging time of this mode to the second predetermined time T2 (for example, but not limited to 10 minutes), so as to avoid the electric vehicle 200 continuously discharging and causing a power waste when the system controller 4 cannot be successfully enabled. In the operation process of the electric vehicle charger 100, since the electric vehicle 200 provides vehicle power Pv to the power path 1, the auxiliary power circuit 3 is activated (step S9), so that it may convert the vehicle power Pv on the power path 1 to supply power to the system controller 4. Then, the controller 4A determines whether the auxiliary power circuit 3 has been activated within a predetermined time (step S91). In particular, the predetermined time may be, for example, but not limited to, 5 minutes. Therefore, when the determination result of step S91 is no, it means that the electric vehicle charger 100 is abnormal or the electric vehicle 200 does not have enough power stored and cannot be discharged, so that it returns to step S3 to reconfirm whether the user has pressed the switch 52 (At this time, the transistor Q is also reset back to the initial turn off state, so that the controller 4A may turn on the transistor Q again according to the trigger Tg). On the contrary, enter step S10.

At step S10, enable the system controller 4 (at this time, the system controller 4 has not yet controlled the main switch 2 to turn on) and confirm that the system controller 4 has been enabled to dominate the operating mode of the feed mode (step S11). If step S11 is not completed, it means that the system controller 4 has not yet been enabled, so it returns to step S11 to continue waiting. On the contrary, it means that the system controller 4 has been enabled, and the pulse signal Sp is provided by the control pilot pin Pcp for handshake communication with the electric vehicle 200 (step S12). Furthermore, after the system controller 4 and the electric vehicle 200 have completed handshake communication, the main switch 2 is turned on (step S13) to feed power to the power device 300 (step S15).

In particular, the feed mode set in step S11 is mainly that the system controller 4 adjusts the temporary mode (temporary feed mode) temporarily set by the electric vehicle 200 to the steady-state mode (steady-state feed mode) generally dominated by the system controller 4, which is a normal feed mode. On the other hand, when executing the operation flow of the electric vehicle charger 100 in steps S9 to S11, the electric vehicle 200 determines whether the handshake communication with the electric vehicle charger is successful or not (step S14), which is mainly to determine whether the system controller 4 has completed the handshake communication with the electric vehicle 200. When the system controller 4 has not completed handshake communication with the electric vehicle 200 within the second predetermined time T2 (for example, but not limited to 10 minutes), the system controller 4 returns to step S2 to make the electric vehicle 200 stop providing vehicle power Pv. On the contrary, the electric vehicle 200 may maintain the operating mode in the feed mode according to the instructions of the system controller 4 (step S16). This feed mode is not necessary to preset the time of the feed (it belongs to the steady-state mode), and the electric vehicle 200 may subsequently operate correspondingly according to the handshake communication from the system controller 4. In one implementation, the detailed operation methods not described in FIGs. 3A to 3B may be referred to FIG. 2, and is not repeated description thereto.

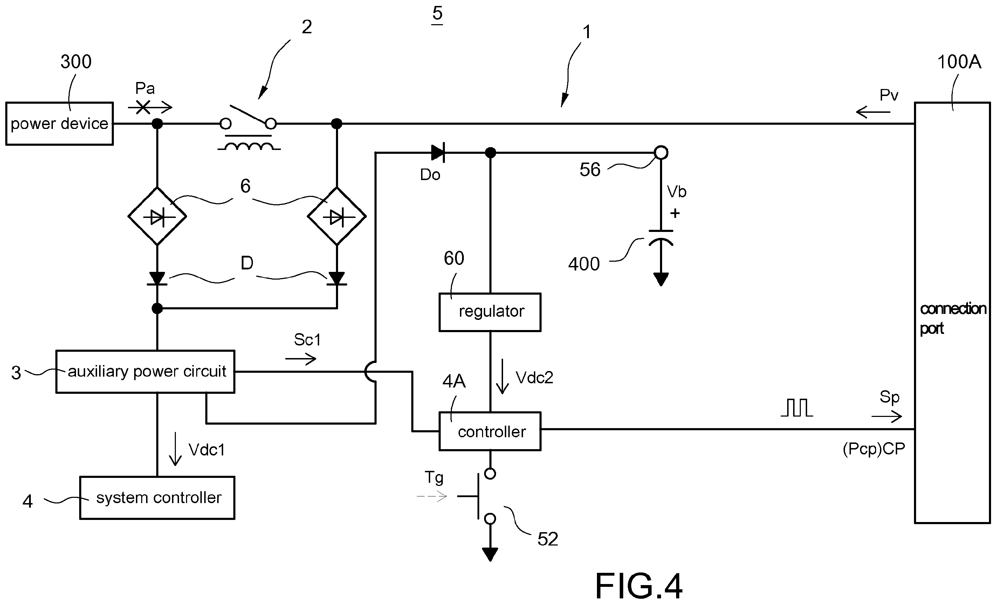

Please refer to FIG. 4 which shows a circuit block diagram of a second embodiment of the wake-up circuit according to the present disclosure, and also refer to FIGs. 1-3B. In FIG. 4, the main operating mode is similar to FIG. 2, in that when the system controller 4 is in the power outage state, the electric vehicle 200 is notified to set to feed mode according to the trigger Tg, and similar operations are continued until the system controller 4 turns on the main switch 2 to establish the power path 1. Therefore, the structure of the electric vehicle charger 100 of FIG. 4 is similar to FIG. 2, differing only in that the wake-up circuit 5 is not exactly the same. Furthermore, the controller 4A of FIG. 4 is coupled to the control pilot pin Pcp and the control pilot end CP of the electric vehicle 200. When the user presses the switch 52 to generate a trigger Tg, the controller 4A may provide the pulse signal Sp to the control pilot end CP of the electric vehicle 200 according to the trigger Tg. In this way, the electric vehicle 200 may be notified by the pulse signal Sp that the operating mode needs to be set to the feed mode. On the contrary, when the user does not press the switch 52, no trigger Tg is generated, so the controller 4A fails to detect the trigger Tg and fails to provide the pulse signal Sp, so that the electric vehicle charger 100 and the electric vehicle 200 are maintained in the current state.

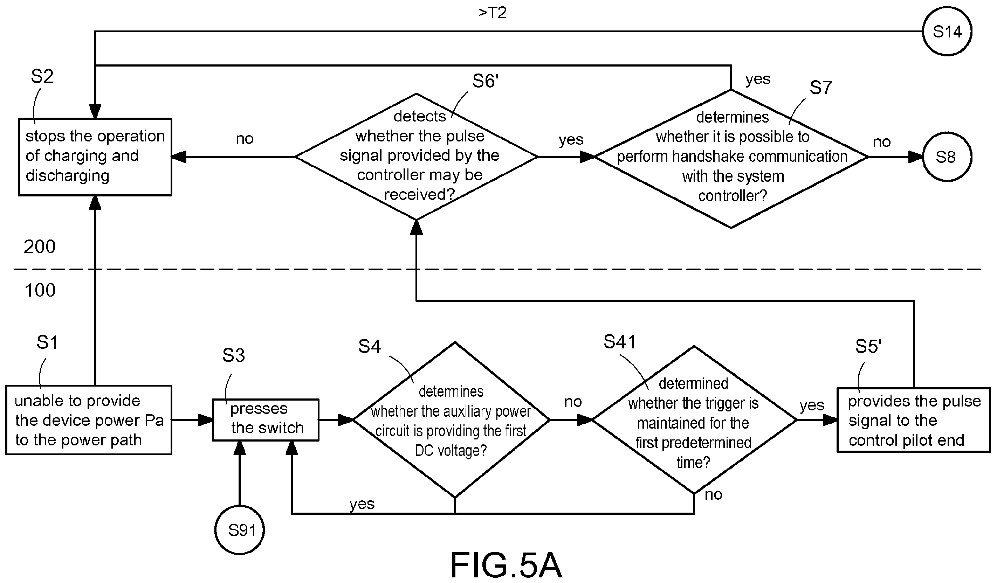

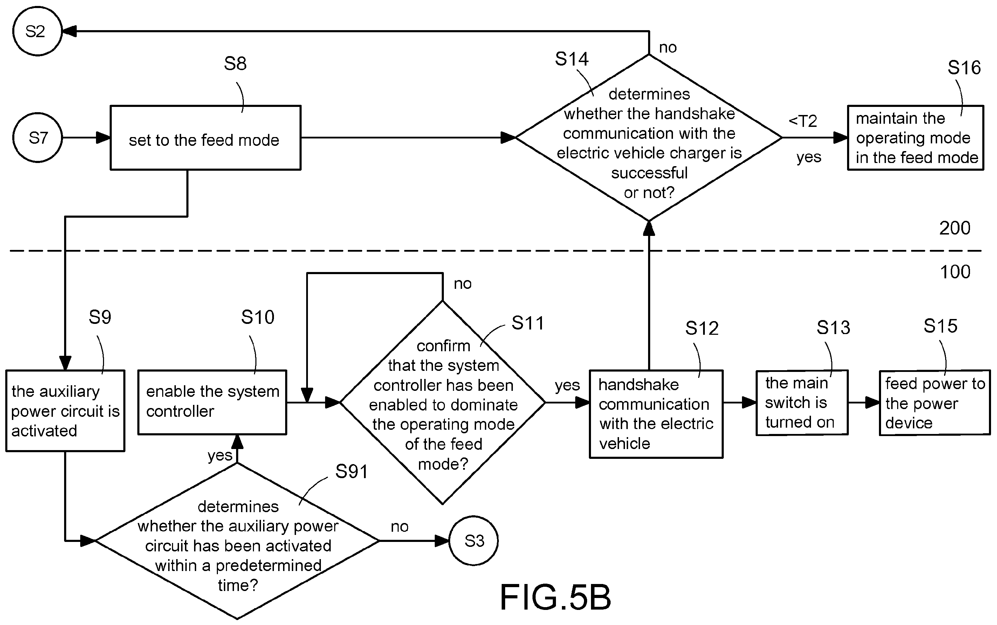

On the other hand, the wake-up circuit 5 in FIG. 4 is similar to FIG. 2, and also has a similar operating method and foolproof mechanism. The difference is that the operation method of turning on/off transistor Q of controller 4A in FIG. 2 is replaced by the operation method of providing/not providing the pulse signal Sp of controller 4A in FIG. 4. The other modes of operation are the same as FIG. 2 and may achieve effects similar to those of FIG. 2, and is not repeated description thereto. For example, but not limited to, when the controller 4A determines that both are present during the same period, the controller 4A determines the trigger Tg to be an invalid trigger (i.e., disables the switch 52) and fails to change providing/not providing of the current pulse signal according to the trigger Tg. In addition, FIG. 5A shows a first operation flowchart of the second embodiment of the electric vehicle charger according to the present disclosure, and the operation flow is similar to FIG. 3A. The difference is that steps S5 and S6 of FIG. 3A are replaced by S5' and S6'. Specifically, in FIG. 5A, when the determination result of step S41 is yes, then the controller 4A provides the pulse signal Sp to the control pilot end CP (step S5'), and the electric vehicle 200 detects whether the pulse signal Sp provided by the controller 4A may be received (step S6'). Furthermore, step S6' is similar to FIG. 2, and may also include the foolproof mechanism to make the determination to enter step S7 or return to step S2. Except for this, the other operation flows are the same as FIG. 3A, and is not repeated description thereto. On the other hand, FIG. 5B shows a second operation flowchart of the second embodiment of the electric vehicle charger according to the present disclosure, and the operation flow is the same as FIG. 3B, and is not repeated description thereto.

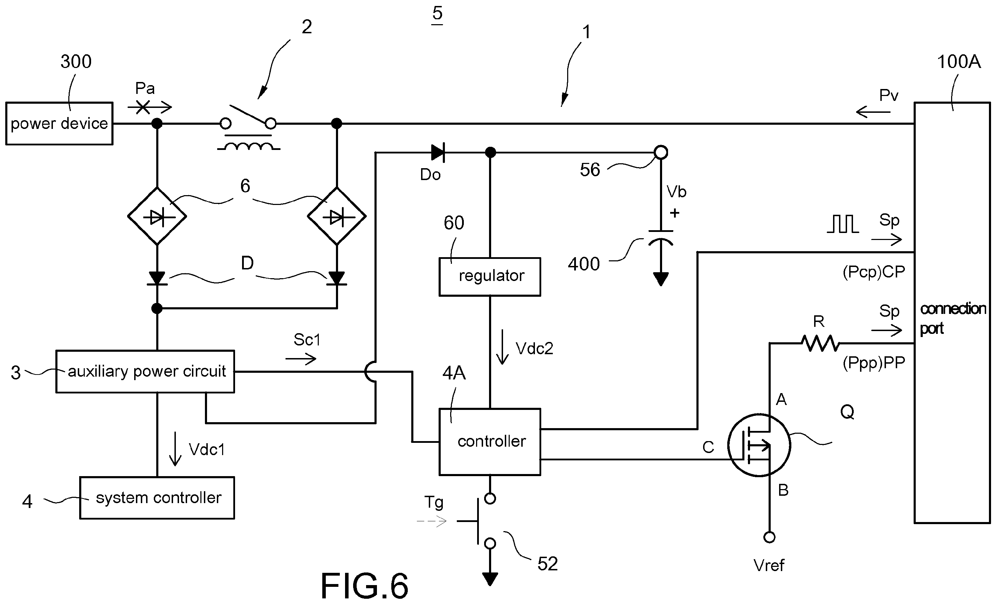

Please refer to FIG. 6, which shows a circuit block diagram of a third embodiment of the wake-up circuit according to the present disclosure, and also refer to FIGs. 1-5B. In FIG. 6, the main operating mode is similar to FIG. 2, in that when the system controller 4 is in the power outage state, the electric vehicle 200 is notified to set to feed mode according to the trigger Tg, and similar operations are continued until the system controller 4 turns on the main switch 2 to establish the power path 1. Therefore, the structure of the electric vehicle charger 100 of FIG. 6 is similar to FIG. 2, differing only in that the wake-up circuit 5 is mainly the combination of FIGs. 2 and 4 to provide a double-confirmation operation. Specifically, the one end of the controller 4A in FIG. 6 is coupled to the control pilot pin Pcp and the control pilot end CP of the electric vehicle 200, and the other end is coupled to the control end C of the transistor Q.

When the user presses switch 52 to trigger Tg, controller 4A may provide the pulse signal Sp according to the trigger Tg to the control pilot end CP of the electric vehicle 200. Furthermore, the controller 4A may turn on the transistor Q according to the triggered Tg, so that the impedance of the proximity pilot end PP is adjusted from the first impedance to the second impedance by coupling the proximity pilot end PP to the reference potential Vref. In this way, the second impedance of the proximity pilot end PP and the pulse signal Sp may notify electric vehicle 200 that it needs to set the operating mode to feed mode. On the contrary, when one or both are missing, it means that there is error in the device, or the user has not pressed switch 52, so that the electric vehicle charger 100 and the electric vehicle 200 maintain in the current state, or to provide a warning indication when confirming that the device is error. Therefore, through this double confirmation operation, the determination of the electric vehicle charger 100 may be made more rigorous, so as to avoid the risk of malfunction and even damage to the device due to erroneous operation.

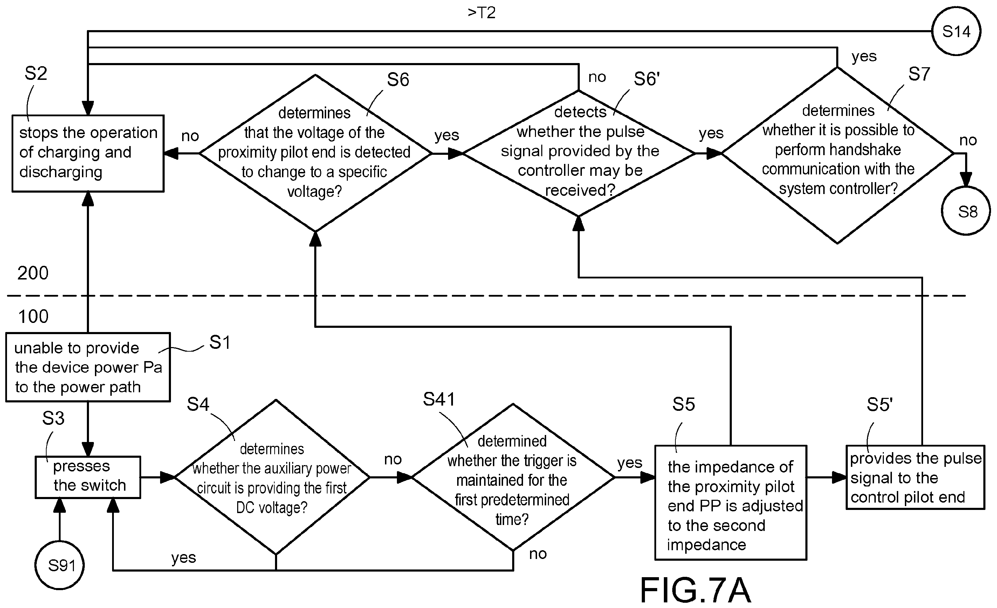

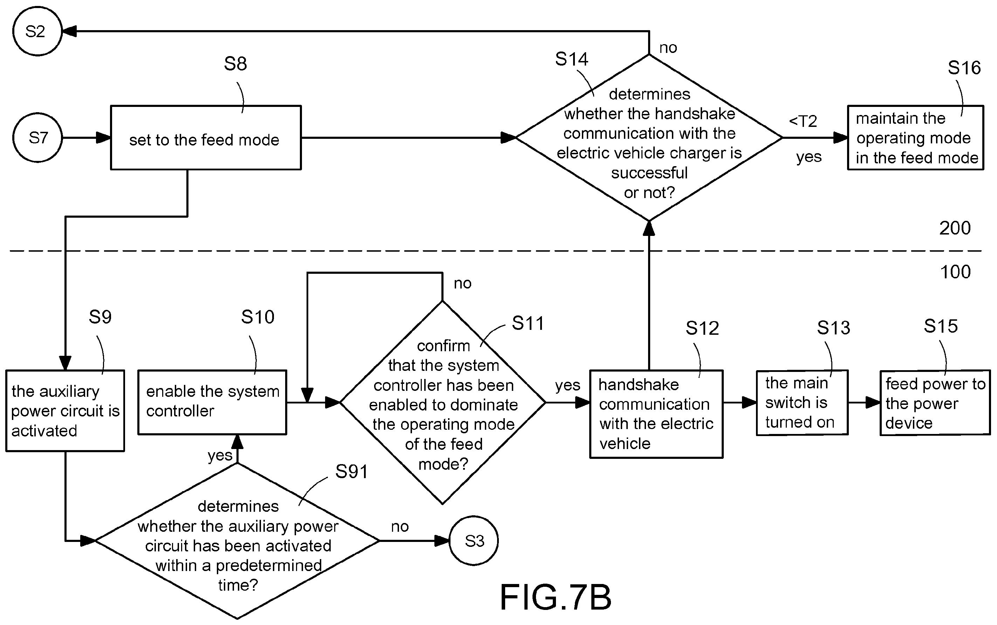

Further, FIG. 7A is a first operation flowchart of the third embodiment of the electric vehicle charger according to the present disclosure, and the operation flow is similar to FIGs. 3A and 5A. The difference is that steps S5, S6, S5', and S6' of FIGs. 3A and 5A are determined in parallel. Specifically, in FIG. 7A, when the determination result of step S41 is yes, the controller 4A adjusts the impedance of the proximity pilot end PP to the second impedance and provides the pulse signal Sp to the control pilot end CP (step S5'). Furthermore, at the electric vehicle 200 end, the electric vehicle 200 determines whether the voltage of the proximity pilot end PP is detected to be changed to the specific voltage (step S6), and also detects whether the pulse signal Sp provided by the controller 4A may be received (step S6'). Moreover, steps S6 and S6' are similar to FIG. 2 and may also include the foolproof mechanism. When both of them are yes, enter step S7 to continue the operation flow. On the contrary, when any one of them is no, return to step S2. Except for this, the other operation flows are the same as FIG. 3A, and is not repeated description thereto. On the other hand, FIG. 7B shows a second operation flowchart of the third embodiment of the electric vehicle charger according to the present disclosure, and the operation flow is the same as FIG. 3B, and is not repeated description thereto.

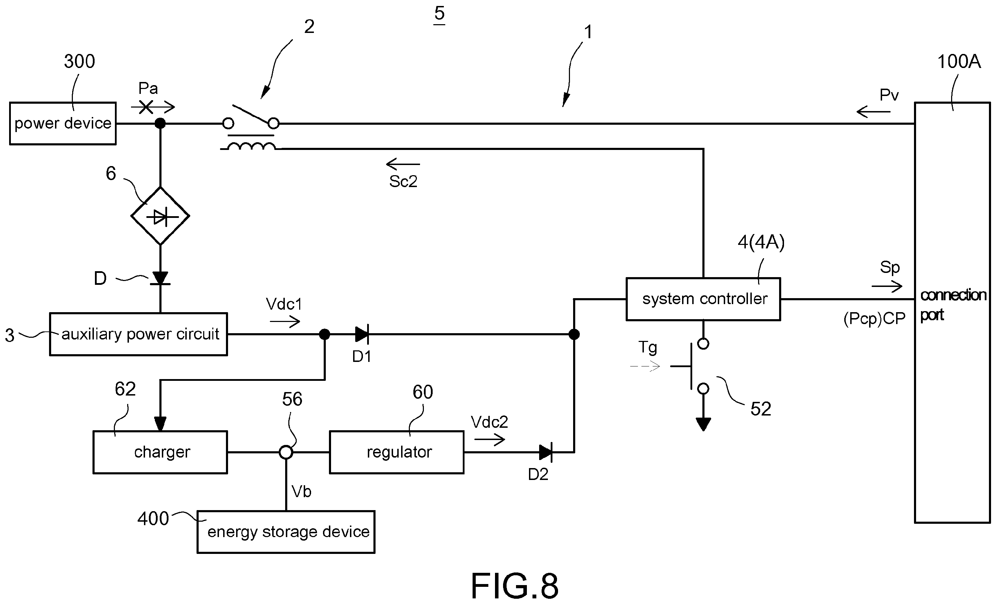

Please refer to FIG. 8, which shows a circuit block diagram of a fourth embodiment of the wake-up circuit according to the present disclosure, and also refer to FIGs. 1-7B. In FIG. 8, the main operating mode is similar to FIG. 2, in that when the system controller 4 is in the power outage state, the electric vehicle 200 is notified to set to feed mode according to the trigger Tg, and similar operations are continued until the system controller 4 turns on the main switch 2 to establish the power path 1. Therefore, the structure of the electric vehicle charger 100 of FIG. 8 is similar to FIG. 2, differing only in that the controller 4A is the system controller 4. Specifically, in FIG. 8, the auxiliary power circuit 3 is coupled to the system controller 4, and the regulator 60 is coupled to the system controller 4 and the connection end 56. Furthermore, the system controller 4 is coupled to the main switch 2, and may use, for example, but not limited to, Power Line Communication (PLC) as a bridge for handshake communication with the electric vehicle 200 by the control pilot pin Pcp. When the electric vehicle charger 100 is in the normal operation (for example, but not limited to the charging mode), the system controller 4 is enabled according to the first DC voltage Vdc1 provided by the auxiliary power circuit 3, and transmits the pulse signal Sp to the electric vehicle 200 by the control pilot signal Pcp to perform handshake communication with the electric vehicle 200, and provides the second control signal Sc2 to turn on the main switch 2, so as to provide the device power Pa to the electric vehicle 200 by the main switch 2 to charge the electric vehicle 200.

On the contrary, in the power outage state, when the controller 4A (system controller 4) is enabled according to the energy storage voltage Vb, the system controller 4 has been woken up and may dominate any operation of the electric vehicle charger 100. Therefore, the system controller 4 may dominate transmit the pulse signal Sp to the electric vehicle 200 for handshake communication and provide the second control signal Sc2 to turn on the main switch 2 after the handshake communication is completed. In particular, when entering the power outage state, the electric vehicle charger 100 may select to directly control the regulator 60 to convert the energy storage voltage Vb to the second DC voltage Vdc2 to supply power to the system controller 4, so as to redundantly enable the system controller 4 directly. Alternatively, the electric vehicle charger 100 may wait for the user to press the switch 52, so that the system controller 4 is grounded through the switch 52 to form a closed loop and be enabled, so as to save the power consumption of the energy storage device 400. Except for this, the system controller 4 may also be set to a standby mode, which means that in order to save the power consumption of the system controller 4, only the power for maintaining the most basic operation of the electric vehicle charger 100 is temporarily provided, and other non-basic devices inside the electric vehicle charger 100 are shut down, so as to save the power consumption. In this way, the power consumption of the system controller 4 may be saved, and the power of the energy storage device 400 may be avoided from being depleted prematurely due to the power device 300 is continuously out of power.

On the other hand, the system controller 4 may also be set to combine at least any two of the above three operation methods. For example, but not limited to, the system controller 4 may set a power threshold of the energy storage device 400. When the power stored in the energy storage device 400 is higher than the power threshold, the power stored in the energy storage device 400 is converted by the regulator 60 and supplied to the system controller, so that the system controller 4 continues to operate. Furthermore, when the power stored in the energy storage device 400 is lower than the power threshold, the system controller 4 is first deactivated, and after the user presses the switch 52, the remaining power of the energy storage device 400 can be converted by the regulator 60 and supplied to the system controller 4, so that the system controller 4 is woken up only after the user presses the switch 52. In this way, the convenience of using the electric vehicle charger 100 may be increased.

Since the system controller 4 generally requires a larger amount of power (compared to controller 4A of FIG. 2), the power that may be supplied by the supercapacitor or the small battery is generally insufficient, so that the power of the energy storage device 400 is consumed prematurely. Therefore, in the embodiment of FIG. 8, the energy storage device 400 may preferably be a device such as a storage battery that may store more power. Furthermore, the energy storage device 400 may preferably be designed as a modular design that can be replaced at any time, so that when the energy storage device 400 runs out of power, it may be replaced immediately to increase the convenience of use. In order to cooperate with the energy storage device 400 that may provide the larger amount of power, the voltage regulator 60 is preferably a switching power conversion circuit (for example, but not limited to, a DC/DC converter). In addition, in one embodiment, the electric vehicle charger 100 may include unidirectional conduction elements D1, D2. The unidirectional conduction element D1 is connected in series between the auxiliary power circuit 3 and the system controller 4, and the unidirectional conduction element D2 is connected in series between the regulator 60 and the system controller 4. The unidirectional conduction elements D1, D2 are mainly used to prevent power from being fed back to the output end of the other when one of the auxiliary power circuit 3 and the regulator 60 provides power (that is, the first DC voltage Vdc1 or the second DC voltage Vdc2), so as to avoid invalidate or damage of the other.

Furthermore, the function of the unidirectional conduction element Do in FIG. 2 may be replaced by a charger 62. Specifically, the wake-up circuit 5 may include a charger 62, and the charger 62 is coupled to the auxiliary power circuit 3 and the connection end 56. When the auxiliary power circuit 3 provides the first DC voltage Vdc1, the charger 62 may convert the first DC voltage Vdc1 to the energy storage voltage Vb to charge the energy storage device 400. Further, to accommodate the energy storage device 400 that can provide a larger amount of power, the wake-up circuit 5 may preferably include a charger 62 to provide a larger amount of power to charge the energy storage device 400. Furthermore, the charger 62 may be a switching power conversion circuit and generally includes a backflow prevention function, so that the energy storage voltage Vb is not accidentally reversed back to the auxiliary power circuit 3. In summary, by the circuit configuration of FIG. 8, the wake-up circuit 5 may be made to function like Uninterruptible Power Supply (UPS), so that it may still back up power supply to wake up the system controller 4 in the power outage state.

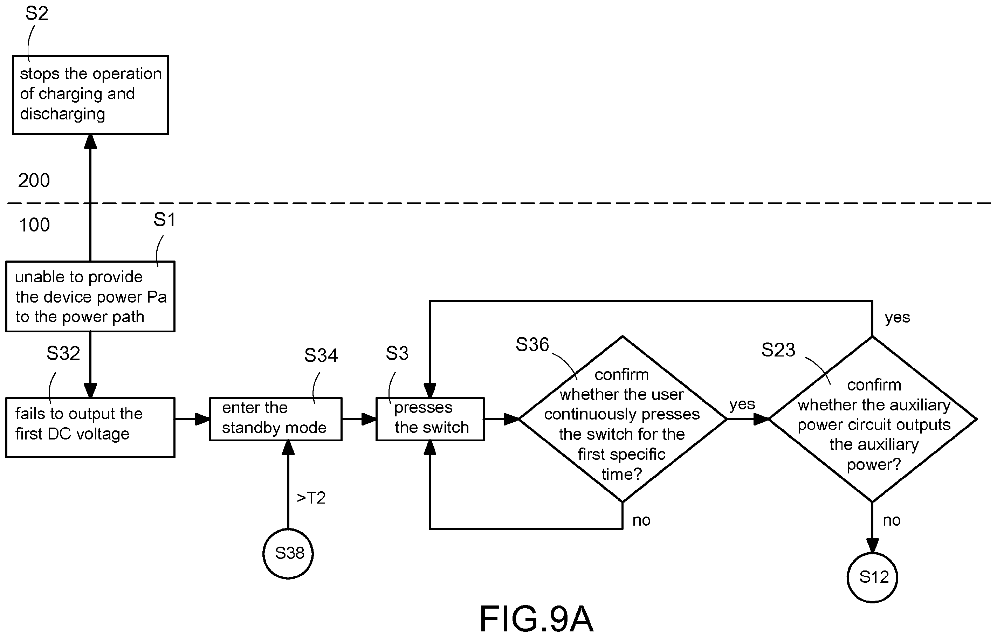

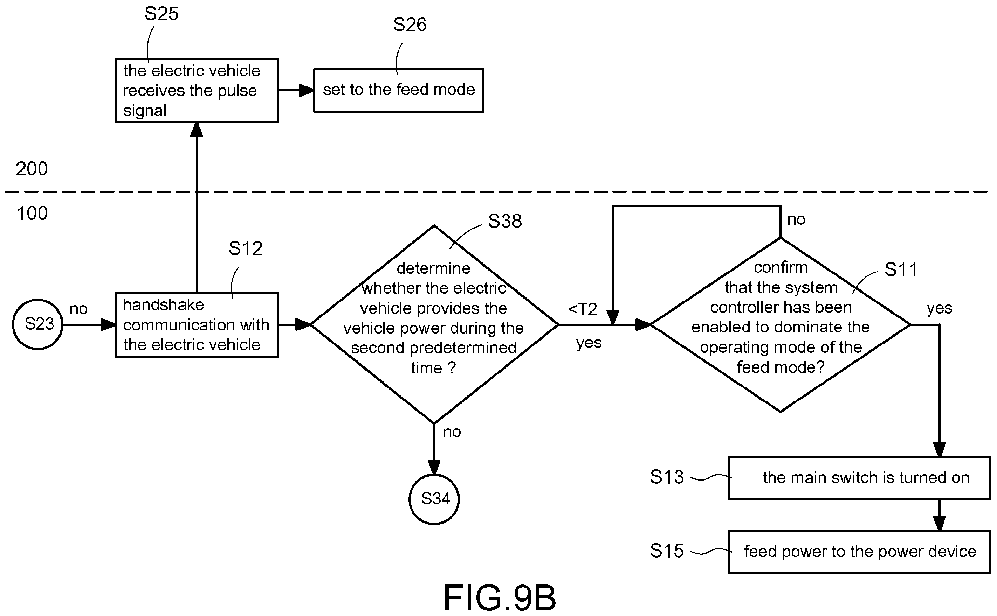

Please refer to FIG. 9A which shows a first operation flowchart of the fourth embodiment of the electric vehicle charger according to the present disclosure, FIG. 9B which shows a second operation flowchart of the fourth embodiment of the electric vehicle charger according to the present disclosure. When the power device 300 fails to provide the device power Pa to the power path 1 (step S1), the electric vehicle 200 stops charging and discharging (step S2), and the auxiliary power circuit 3 fails to output the first DC voltage Vdc1 (step S32). At this time, the regulator 60 may convert the energy storage voltage Vb to the second DC voltage Vdc2, so that the system controller 4 is woken up and may selectively enter the standby mode (step S34) to save the power consumption of the energy storage device 400 (or may enter at least one of the above three operating methods). Then, entering step S3 of FIG. 3A, and after step S3, entering step S36 to confirm whether the user continuously presses the switch 52 for the first specific time T1 so that the trigger Tg is maintained for the first specific time T1. When the determination is no, return to step S3. On the contrary, it is confirmed again whether the auxiliary power circuit 3 outputs the auxiliary power (step S23).

If the determination at step S23 is yes, it means that the power device 300 may still continue to provide device power Pa or the auxiliary power circuit 3 is still in operation, so return to step S3 to reconfirm. On the contrary, enter step S12 of FIG. 3B to provide pulse signal Sp by control pilot pin Pcp for handshake communication with the electric vehicle 200. At this time, the electric vehicle 200 receives the pulse signal Sp (step S25) and is accordingly set to the feed mode (step S26). The electric vehicle charger 100 enters to step S38 after step S12 to determine whether the electric vehicle 200 provides the vehicle power Pv to the power path 1 during the second predetermined time T2. When the determination result is no, it returns to step S34 for continuous operation in the standby mode. On the contrary, it enters step S11 of FIG. 3B. Except for this, the detailed description may be referenced in FIG. 3B and is not repeated description thereto.

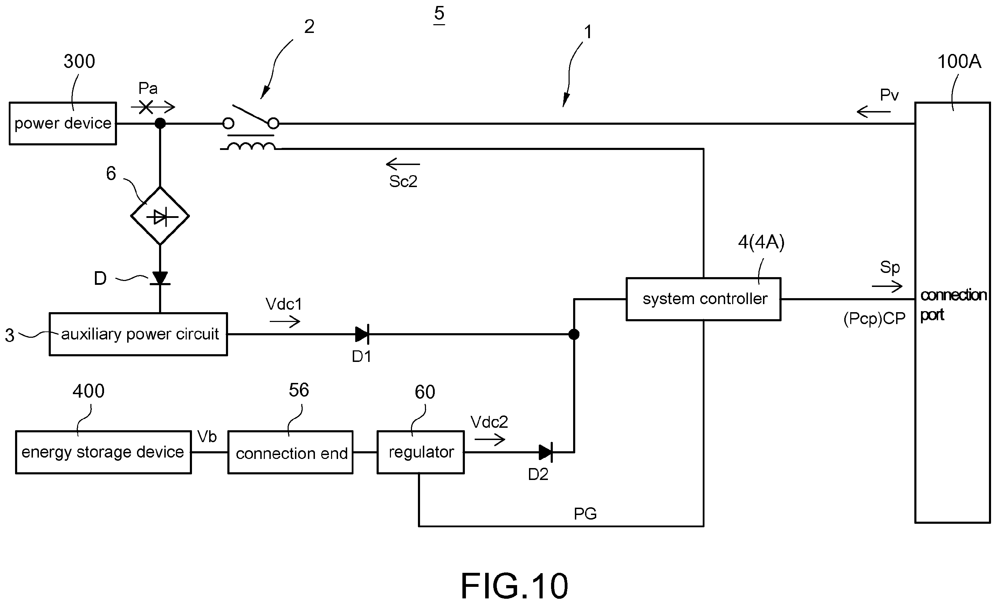

Please refer to FIG. 10, which shows a circuit block diagram of a fifth embodiment of the wake-up circuit according to the present disclosure, and also refer to FIGs. 1-9B. In FIG. 10, the main operating mode is different from that of FIG. 2, and there is no need to notify the electric vehicle 200 to set the feed mode according to the trigger Tg. On the other hand, the structure of the electric vehicle charger 100 of FIG. 10 is similar to that of FIG. 8, and the difference is that the energy storage device 400 is a hot-swappable device. Specifically, in FIG. 10, the connection end 56 may be a USB Type-C connection end and may be plugged into a USB PD capable energy storage device 400 (for example, but not limited to, a mobile power supply Power Bank). When the energy storage device 400 is plugged into the connection end 56 and the energy storage voltage Vb is provided to the regulator 60, the regulator 60 provides the second DC voltage Vdc2 to wake up the system controller 4. Furthermore, the regulator 60 also provides a power good signal PG instead of the trigger Tg to the system controller 4, so that the system controller 4 is set to the feed mode according to the power good signal PG. Therefore, the electric vehicle charger 100 of FIG. 10 may be woken up automatically after the energy storage device 400 is plugged into the connection end 56 and attempt to operate in the feed mode, without using an additional switch 52 to provide a trigger Tg to wake up the system controller 4. Furthermore, in one embodiment, the circuit structure and operating method of the electric vehicle charger 100 of FIG. 10 is the same as that of FIG. 8 and is not repeated description thereto.

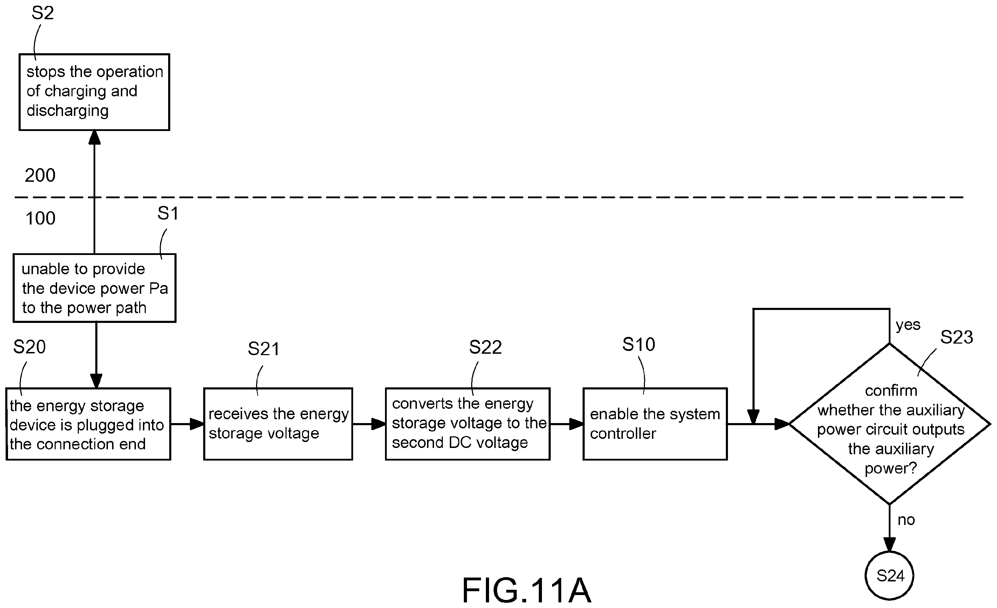

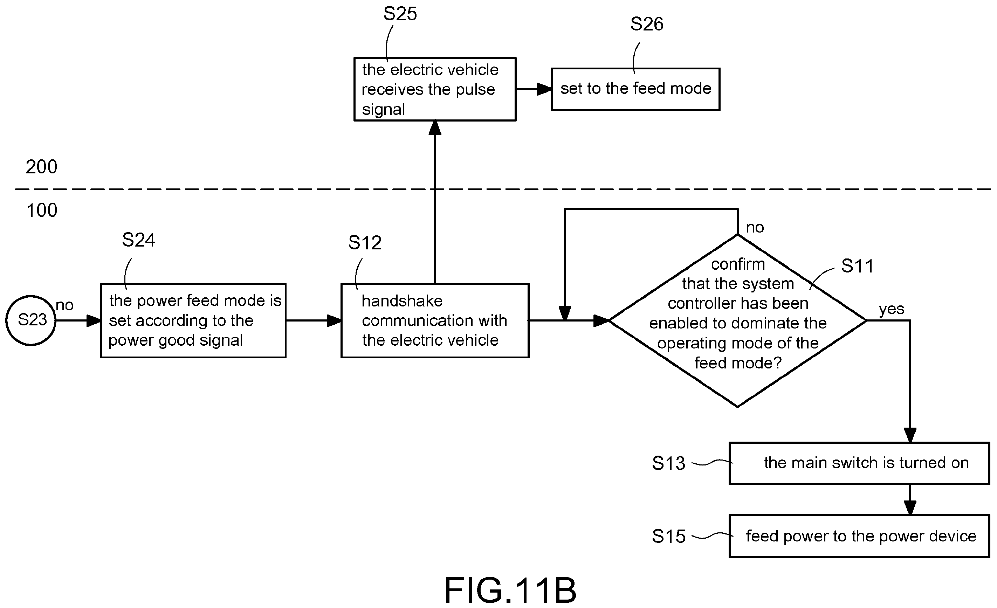

Please refer to FIG. 11A which shows a first operation flowchart of the fifth embodiment of the electric vehicle charger according to the present disclosure, FIG. 11B which shows a second operation flowchart of the fifth embodiment of the electric vehicle charger according to the present disclosure. When the power device 300 is unable to provide device power Pa to the power path 1 (step S1), the electric vehicle 200 stops the charging and discharging operation (step S2). Furthermore, when the energy storage device 400 is plugged into the connection end 56 (step S20), the electric vehicle charger 100 receives the energy storage voltage Vb supplied by the energy storage device 400 through the connection end 56 (step S21), and the regulator 60 converts the energy storage voltage Vb to the second DC voltage Vdc2 (step S22) to supply power to the system controller 4 and enable the system controller 4 (step S10).

After step 10, enter step S23 of FIG. 9A, and when the determination at step S23 is yes, it means that the power device 300 may still continue to provide the device power Pa or the auxiliary power circuit 3 is still in operation, and therefore return to step S23 to reconfirm. On the contrary, the power feed mode is set according to the power good signal PG (step S24), and enter step S12 of FIG. 3B to provide the pulse signal Sp by the control pilot pin Pcp for handshake communication with the electric vehicle 200. At this time, the electric vehicle 200 receives the pulse signal Sp (step S25) and is accordingly set to the feed mode (step S26). In one embodiment, the detailed operation methods not described in FIGs. 11A to 11B may be referred to FIGs. 3B, 9A, 9B, and is not repeated description thereto.

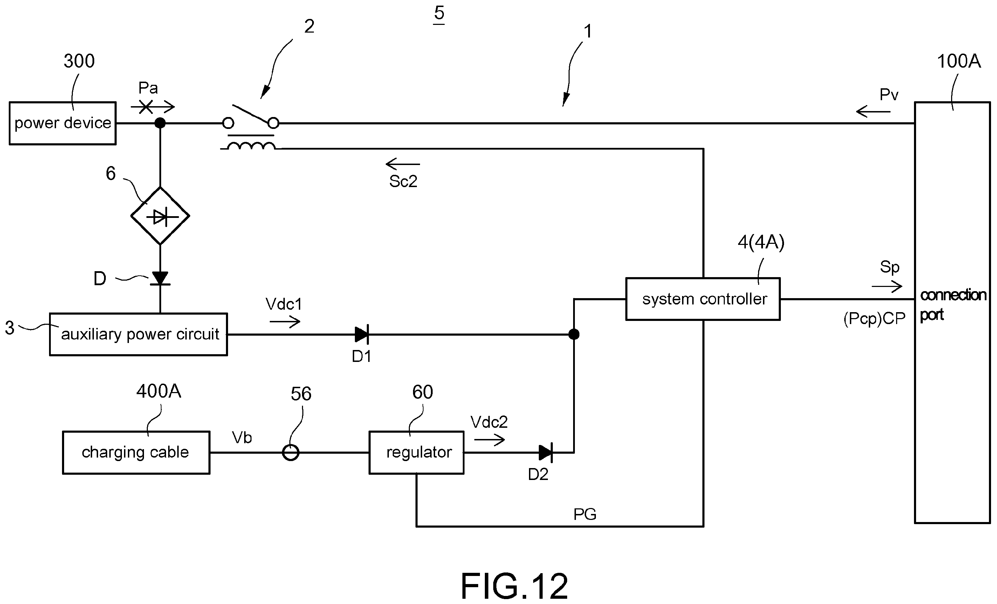

Please refer to FIG.12, which shows a circuit block diagram of a sixth embodiment of the wake-up circuit according to the present disclosure, and also refer to FIGs. 1-11B. In FIG. 12, the main operating method is similar to that of FIG. 10, in that there is no need to notify the electric vehicle 200 to be set to the feed mode according to the trigger Tg. On the other hand, the structure of the electric vehicle charger 100 of FIG. 12 is similar to FIG. 10, and the difference is that the energy storage device 400 may be replaced by a charging cable 400A that is generally used in a vehicle cigarette lighters, so that the electric vehicle charger 100 may be woken up automatically after the energy storage device 400 is plugged into the connection end 56 and attempt to operate in the feed mode. Specifically, one end of the charging cable 400A is plugged into the hole of the vehicle cigarette lighters of the electric vehicle 200 and the other end is plugged into the connection end 56 of the electric vehicle charger 100 to couple to the regulator 60. The advantage of using the charging cable 400A is that the charging cable 400A may be used to provide the energy storage voltage Vb to wake up the system controller 4 even if the user does not have any energy storage device 400 and the electric vehicle 200 also does not support a self-set feed mode coincidentally. Under this condition, the only factor to be considered is whether the charging cable 400A is long enough to extend to the electric vehicle charger 100. Except for this, the other functions and operations of the circuit of FIG. 12 are similar to those of FIG. 10 and is not repeated description thereto.

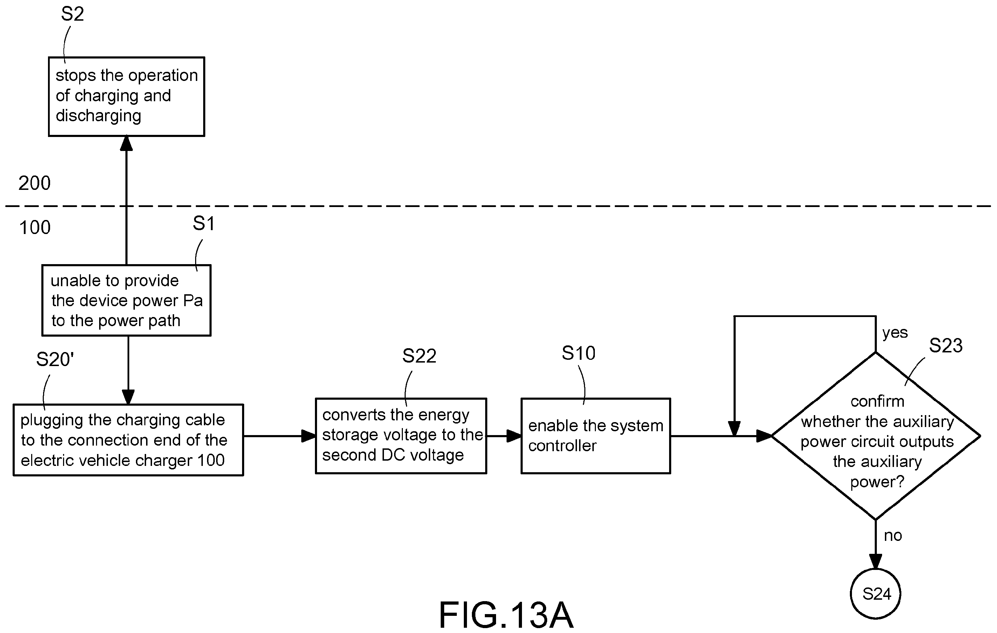

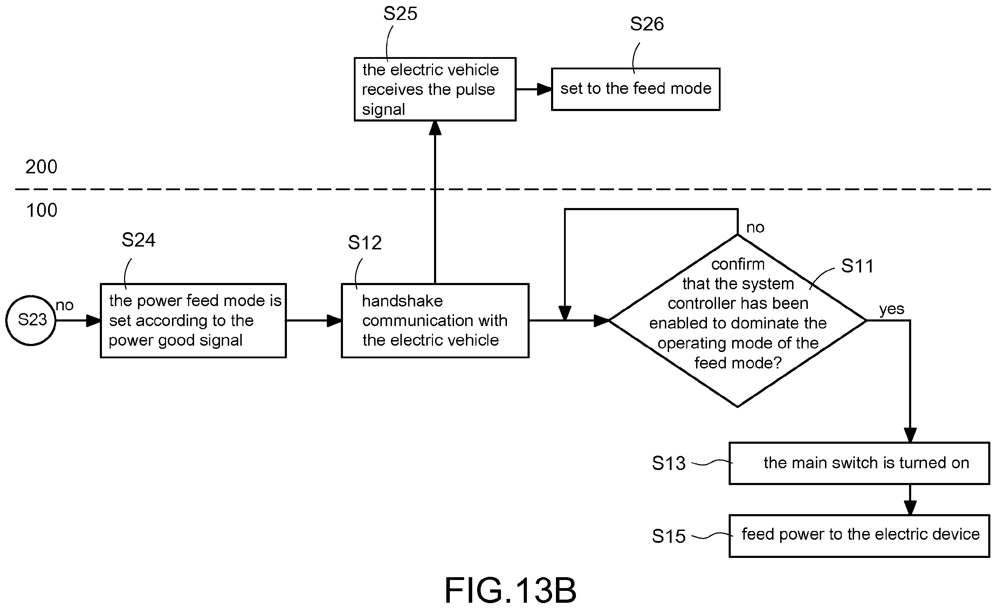

Please refer to FIG.13A which shows a first operation flowchart of the sixth embodiment of the electric vehicle charger according to the present disclosure, and FIG.13B which shows a second operation flowchart of the sixth embodiment of the electric vehicle charger according to the present disclosure. The operation flow of FIG. 13A is similar to FIG. 11A, and the difference is that steps S20 and S21 of FIG. 11A are replaced with step S20', wherein the other end of the charging cable 400A is coupled to the regulator 60 by plugging the other end of the charging cable 400A to the connection end 56 of the electric vehicle charger 100. Except for this, the detailed description may be referenced in FIG. 11A and is not repeated description thereto. In addition, the operation flow of FIG. 13A is the same as FIG. 11B and is not repeated description thereto.

As will become apparent to the skilled person when studying the above disclosure, the subject-matter of the appended claims can also be combined in a different manner as specifically claimed. In particular the term "according to claim 1" and similar shall be deemed to encompass also the meaning "according to any of the preceding (antecedent) claims".

## Claims

1. A wake-up circuit (5) for an electric vehicle charger (100), the electric vehicle charger (100) comprising a power path (1) for coupling a power device (300) and an electric vehicle, and an auxiliary power circuit (3) for coupling the power path (1), when the power device (300) fails to provide a device power (Pa) to the power path (1), the power path (1) is disconnected, and the auxiliary power circuit (3) fails to provide a first DC voltage (Vdc1) to supply power to a system controller (4) according to the device power (Pa), causing the system controller (4) to enter a power outage state, the wake-up circuit (5) comprising:
a switch (52) configured to receive a trigger (Tg),
a controller (4A) coupled to the electric vehicle and the switch (52), and
a connection end (56) coupled to the controller (4A), and the connection end (56) configured to be coupled to an energy storage device (400), so that when the electric vehicle charger (100) is in the power outage state, the controller (4A) is enabled according to an energy storage voltage (Vb) provided by the energy storage device (400),
wherein the controller (4A) is configured to notify the electric vehicle to be set to a feed mode according to the trigger (Tg) when the controller (4A) is in the power outage state, so that the electric vehicle is configured to provide a vehicle power (Pv) to the power path (1), and the auxiliary power circuit (3) is configured to provide the first DC voltage (Vdc1) to supply power to the system controller (4) according to the vehicle power (Pv).

2. The wake-up circuit (5) as claimed in claim 1, wherein the controller (4A) is coupled to a proximity pilot pin (Ppp) of the system controller (4), and an impedance of the proximity pilot pin (Ppp) is a first impedance when the trigger (Tg) is absent; the controller (4A) is configured to adjust the impedance from the first impedance to a second impedance according to the trigger (Tg), so as to notify the electric vehicle to be set to the feed mode by the second impedance.

3. The wake-up circuit (5) as claimed in claim 2, further comprising:
a transistor (Q) comprising a first end (A), a second end (B), and a control end (C), wherein the first end (A) is coupled to the proximity pilot pin (Ppp), the second end (B) is coupled to a reference potential (Vref), and the control end (C) is coupled to the controller (4A),
wherein the controller (4A) is configured to turn on the transistor (Q) according to the trigger (Tg), so as to couple the proximity pilot pin (Ppp) to the reference potential (Vref) and adjust the impedance from the first impedance to the second impedance.

4. The wake-up circuit (5) as claimed in claim 3, wherein the controller (4A) is configured to determine the trigger (Tg) as a valid trigger (Tg) according to that the trigger (Tg) is maintained for a first predetermined time (T1), and turn on the transistor (Q), so that the electric vehicle sets to the feed mode according to the second impedance.

5. The wake-up circuit (5) as claimed in claim 1, wherein the controller (4A) is coupled to a control pilot pin (Pcp) of the system controller (4), and the controller (4A) is configured to provide a pulse signal (Sp) to the control pilot pin (Pcp) according to the trigger (Tg), so as to notify the electric vehicle to be set to the feed mode by the pulse signal (Sp).

6. The wake-up circuit (5) as claimed in claim 5, wherein the controller (4A) is configured to determine the trigger (Tg) as a valid trigger (Tg) according to that the trigger (Tg) is maintained for a first predetermined time (T1), and provide the pulse signal (Sp), so that the electric vehicle is set to the feed mode according to the pulse signal (Sp).

7. The wake-up circuit (5) as claimed in claim 5, wherein when the controller (4A) detects the trigger (Tg) and the auxiliary power circuit (3) provides the first DC voltage (Vdc1), the controller (4A) is configured to determine the trigger (Tg) as an invalid trigger (Tg) to disable the switch (52).

8. The wake-up circuit (5) as claimed in claim 1, wherein the controller (4A) is the system controller (4), and the controller (4A) is configured to be enabled according to the energy storage voltage (Vb) or the first DC voltage (Vdc1), and to connect the power path (1) when a handshake communication is completed with the electric vehicle.

9. The wake-up circuit (5) as claimed in claim 1, further comprising:
a regulator (60) coupled between the connection end (56) and the controller (4A), wherein the regulator (60) is configured to convert the energy storage voltage (Vb) to a second DC voltage (Vdc2), so as to provide the second DC voltage (Vdc2) to supply power to the controller (4A), and
a unidirectional conduction element (Do, D1, D2) coupled between the connection end (56) and the auxiliary power circuit (3), wherein the unidirectional conduction element (Do, D1, D2) from the auxiliary power circuit (3) to the connection end (56) is forward biased,
wherein the auxiliary power circuit (3) is coupled to the connection end (56), and the auxiliary power circuit (3) is configured to charge the energy storage device (400) when the auxiliary power circuit (3) provides the first DC voltage (Vdc1).

10. The wake-up circuit (5) as claimed in claim 9, further comprising:
a charger (62) coupled between the auxiliary power circuit (3) and the connection end (56), and when the auxiliary power circuit (3) provides the first DC voltage (Vdc1), the charger (62) is configured to convert the first DC voltage (Vdc1) to the energy storage voltage (Vb) to charge the energy storage device (400).

11. A method for operating an electric vehicle charger (100), wherein the electric vehicle charger (100) is configured to be coupled to a power device (300) and an electric vehicle by a power path (1), and the method comprising steps of:
disconnecting the power path (1) when the power device (300) fails to provide a device power (Pa) to the power path (1), and causing an auxiliary power circuit (3) of the electric vehicle charger (100) to be unable to provide a first DC voltage (Vdc1) to supply power to a system controller (4) of the electric vehicle charger (100) according to the device power (Pa), thereby disabling the system controller (4) and entering a power outage state,
detecting whether a trigger (Tg) is received according to an energy storage voltage (Vb) in the power outage state,
notifying the electric vehicle to be set to a feed mode according to the trigger (Tg) when the trigger (Tg) is received,
causing the electric vehicle to provide a vehicle power (Pv) to the power path (1) in the feed mode,
causing the auxiliary power circuit (3) to provide the first DC voltage (Vdc1) to supply power to the system controller (4) according to the vehicle power (Pv), so that the system controller (4) is enabled, and
performing a handshake communication between the system controller (4) and the electric vehicle when the system controller (4) is enabled, and connecting the power path (1) when the handshake communication is completed, thereby feeding the vehicle power (Pv) to the power device (300).

12. The method for operating the electric vehicle charger (100) as claimed in claim 11, further comprising a step of:
determining the trigger (Tg) as a valid trigger (Tg) according to the trigger (Tg) being maintained for a first predetermined time (T1), and setting the electric vehicle to the feed mode according to the valid trigger (Tg).

13. The method for operating the electric vehicle charger (100) as claimed in claim 11, further comprising steps of:
presetting a second predetermined time (T2), and
stopping the electric vehicle from providing the vehicle power (Pv) when the handshake communication fails to be completed during the second predetermined time (T2).

14. The method for operating the electric vehicle charger (100) as claimed in claim 11, further comprising steps of:
detecting whether the first DC voltage (Vdc1) provided by the auxiliary power circuit (3) is received when detecting the trigger (Tg), and
determining the trigger (Tg) as an invalid trigger (Tg) when the first DC voltage (Vdc1) is received, and maintaining a current operation without change according to the trigger (Tg).

15. The method for operating the electric vehicle charger (100) as claimed in claim 11, further comprising steps of:
adjusting an impedance of a proximity pilot pin (Ppp) of the system controller (4) from a first impedance to a second impedance according to the trigger (Tg),
providing a pulse signal (Sp) to a control pilot pin (Pcp) of the system controller (4) according to the trigger (Tg),
notifying the electric vehicle to be set to the feed mode by the second impedance and the pulse signal (Sp), and
maintaining the electric vehicle in a current state when the impedance is not the second impedance or the pulse signal (Sp) is not provided to the control pilot pin (Pcp).
